Europäisches Patentamt

European Patent Office

Office européen des brevets

(19)

(11) Veröffentlichungsnummer: **0 360 094**
**A2**

## (12) EUROPÄISCHE PATENTANMELDUNG

(21) Anmeldenummer: 89116625.8

(22) Anmeldetag: 08.09.89

(51) Int. Cl.5: **C08F 10/06 , C08F 2/34**

(30) Priorität: 21.09.88 DE 3832082

(43) Veröffentlichungstag der Anmeldung:
**28.03.90 Patentblatt 90/13**

(84) Benannte Vertragsstaaten:
**BE DE ES FR GB IT NL**

(71) Anmelder: **BASF Aktiengesellschaft**
**Carl-Bosch-Strasse 38**
**D-6700 Ludwigshafen(DE)**

(72) Erfinder: **Rau, Wolfgang, Dr.**
**Turnerstrasse 161**
**D-6900 Heidelberg(DE)**
Erfinder: **Faulhaber, Friedrich Richard, Dr.**
**Ostpreussenstrasse 3**
**D-6704 Mutterstadt(DE)**
Erfinder: **Juza, Dirk, Dr.**
**Ottostrasse 23**
**D-5047 Wesseling(DE)**

(54) **Verfahren zum Herstellen von Homopolymerisaten oder Copolymerisaten des Propylens.**

(57) Rahmen ist ein verfahren zum Herstellen von Propylenpolymerisaten durch Polymerisation des zugrundeliegenden Monomer mittels eines Ziegler-Natta-Katalysatorsystems, in der Gasphase in einem Rührbett unter Abfuhr der Polymerisationswärme durch verdampfungskühlung, wobei man das Monomer in einen Polymerisationskessel (2) einbringt und das Polymerisat aus (2) austrägt, mit den Maßgaben, daß man (a) in (2) den Druck und die Temperatur in einem Bereich hält, der dem gasförmigen Zustand des Monomer entspricht, (b) durch eine Abgangsleitung (4) gasförmiges, nicht durch Polymerisation verbrauchtes Monomer aus (2) austrägt, das Monomer in einem Kondensator-Kühler-Speicher-System (5) verflüssigt sowie speichert und in (2) wieder einbringt, (c) die Temperatur in dem Rührbett regelt durch Änderung der pro Zeiteinheit eingebrachten Menge an flüssigem, in (2) verdampfenden Monomer, und (d) das verbrauchte Monomer durch Frisch-Monomer ersetzt. Charakteristikum ist, daß man in weiteren Maßgaben (e) mittels einer Pumpe (9) flüssiges Monomer aus (5) abzieht, in einen Wäscher (11) einbringt, der in der Abgangsleitung (4) zwischengeschaltet ist, (g) mittels des Wäschers (11) die in dem gasförmigen, nicht durch Polymerisation verbrauchten Monomer enthaltenen Feststoffpartikel durch das flüssige Monomer auswäscht, und (h) zusammen mit diesem dem Polymerisationskessel (2) zuführt.

## Verfahren zum Herstellen von Homopolymerisaten oder Copolymerisaten des Propylens

Die Erfindung liegt im Rahmen eines Verfahrens zum Herstellen von Propylen-Homopolymerisaten oder Propylen-Copolymerisaten, die mehr als 50, insbesondere mehr als 80 Gew.% Propylen sowie weniger als 50, insbesondere weniger als 20 Gew.% anderer, 2 bis 8, insbesondere 2 bis 6 Kohlenstoffatome aufweisender α-Monoolefine einpolymerisiert enthalten, durch Polymerisation des bzw. der zugrundeliegenden Monomeren - d.h. des entsprechenden "Monomeren" - gegebenenfalls in Anwesenheit von Wasserstoff als Molekulargewichtsregler, mittels eines Ziegler-Natta-Katalysatorsystems, bei Temperaturen von 40 bis 150, insbesondere 50 bis 110° C und Gesamtdrücken von 10 bis 50, insbesondere 15 bis 40 bar in der Gasphase in einem Rührbett aus kleinteiligem Polymerisat unter Abfuhr der Polymerisationswärme durch Verdampfungskühlung, wobei man durch eine Zuleitung (1) das Monomer kontinuierlich oder taktweise in einen Polymerisationskessel (2) einbringt und durch eine Austragleitung (3) das Polymerisat kontinuierlich oder taktweise aus dem Polymerisationskessel (2) austrägt, mit den Maßgaben, daß man

(a) in dem Polymerisationskessel (2) den Druck und die Temperatur in einem Bereich hält, der dem gasförmigen Zustand des Monomer entspricht,

(b) durch eine Abgangsleitung (4) gasförmiges, nicht durch Polymerisation verbrauchtes Monomer aus dem Polymerisationskessel (2) austrägt, das Monomer in einem Kondensator-Kühler-Speicher-System (5) verflüssigt sowie speichert und über eine Leitung (6) flüssig in den Polymerisationskessel (2) wieder einbringt,

(c) die Temperatur in dem Rührbett regelt durch fortlaufende Messung der Temperatur und eine bei Temperaturänderung mittels eines Regelventils (7) ausgelöste Änderung der pro Zeiteinheit eingebrachten Menge an flüssigem, in dem Polymerisationskessel (2) verdampfenden Monomer, und

(d) mittels einer oder mehrerer Zuleitungen (8) das durch Polymerisation verbrauchte- sowie gegebenenfalls das mit dem Polymerisat ausgetragene - Monomer durch Zufuhr von Frisch-Monomer ersetzt.

Verfahren dieser Art sind bekannt und lassen sich in der Praxis mit gutem Erfolg durchführen.

Im gegebenen Zusammenhang ist insbesondere auf das aus den US-Psen 4 012 573 und 4 330 645 bekannte Verfahren hinzuweisen; es kann im wesentlichen als Basis für das erfindungsgemäße Verfahren angesehen werden.

Diesem lag die Aufgabe zugrunde, das bekannte Verfahren so weiter auszugestalten, daß es mit noch besserem Erfolg durchgeführt werden kann. Wesentliche Zielsetzung hierbei war, Verschmutzungen des Kondensator-Kühler-Speicher-Systems (5) zu verhindern, die sich durch Feststoffpartikel - d.h. im wesentlichen sehr kleine Polymerisatteilchen -ergeben, die aus dem Polymerisationskessel (2) durch die Abgangsleitung (4) von dem gasförmigen, nicht durch Polymerisation verbrauchten Monomer mitgerissen werden.

Dabei war davon auszugehen, daß diese Aufgabe sich zwar lösen ließe durch wechselbare, in der Abgangsleitung (4) zwischengeschaltete Filtersysteme, daß eine solche Lösung aber sowohl verfahrenstechnisch als auch wirtschaftlich wenig erstrebenswert ist.

Es wurde gefunden, daß die besagte Aufgabe mit hervorragendem Ergebnis gelöst werden kann, wenn das eingangs definierte Verfahren derart ausgestaltet wird, daß man in weiteren Maßgaben

(e) mittels einer Pumpe (9) flüssiges Monomer aus dem Kondensator-Kühler-Speicher-System (5) abzieht,

(f) mittels einer Zweigleitung (10) eine Teilmenge des durch die Pumpe (9) abgezogenen flüssigen Monomer in einen Wäscher (11) einbringt, der in der Abgangsleitung (4) zwischengeschaltet ist,

(g) mittels des Wäschers (11) die in dem gasförmigen, nicht durch Polymerisation verbrauchten Monomer enthaltenen Feststoffpartikel durch das flüssige Monomer auswäscht, und

(h) mittels einer Leitung (12) das die aufgenommenen Feststoffpartikel enthaltende flüssige Monomer dem Polymerisationskessel (2) zuführt.

Gegenstand der Erfindung ist somit ein Verfahren zum Herstellen von Propylen-Homopolymerisaten oder Propylen-Copolymerisaten, die mehr als 50, insbesondere mehr als 80 Gew.% Propylen sowie weniger als 50, insbesondere weniger als 20 Gew.% anderer, 2 bis 8, insbesondere 2 bis 6 Kohlenstoffatome aufweisender α-Monoolefine einpolymerisiert enthalten, durch Polymerisation des bzw. der zugrundeliegenden Monomeren - d.h. des entsprechenden "Monomer" - gegebenenfalls in Anwesenheit von Wasserstoff als Molekulargewichtsregler, mittels eines Ziegler-Natta-Katalysatorsystems, bei Temperaturen von 40 bis 150, insbesondere 50 bis 110° C und Gesamtdrücken von 10 bis 50, insbesondere 15 bis 40 bar in der Gasphase in einem Rührbett aus kleinteiligem Polymerisat unter Abfuhr der Polymerisationswärme durch Verdampfungskühlung, wobei man durch eine Zuleitung (1) das Monomer kontinuierlich oder taktweise in einen Polymerisationskessel (2) einbringt und durch eine Austragleitung (3) das Polymerisat kontinuierlich oder taktweise aus dem Polymerisationskessel (2) austrägt, mit den Maßgaben, daß man

(a) in dem Polymerisationskessel (2) den Druck und die Temperatur in einem Bereich hält, der dem gasförmigen Zustand des Monomer entspricht,

(b) durch eine Abgangsleitung (4) gasförmiges, nicht durch Polymerisation verbrauchtes Monomer aus dem Polymerisationskessel (2) austrägt, das Monomer in einem Kondensatorkühler-Speicher-System (5) verflüssigt sowie speichert und über eine Leitung (6) flüssig in den Polymerisationskessel (2) wieder einbringt,

(c) die Temperatur in dem Rührbett regelt durch fortlaufende Messung der Temperatur und eine bei Temperaturänderung mittels eines Regelventils (7) ausgelöste Änderung der pro Zeiteinheit eingebrachten Menge an flüssigem, in dem Polymerisationskessel (2) verdampfenden Monomer, und

(d) mittels einer oder mehrerer Zuleitungen (8) das durch Polymerisation verbrauchte - sowie gegebenenfalls das mit dem Polymerisat ausgetragene - Monomer durch Zufuhr von Frisch-Monomer ersetzt.

Das erfindungsgemäße Verfahren ist dadurch gekennzeichnet, daß man in weiteren Maßgaben

(e) mittels einer Pumpe (9) flüssiges Monomer aus dem Kondensator-Kühler-Speicher-System (5) abzieht,

(f) mittels einer Zweigleitung (10) eine Teilmenge des durch die Pumpe (9) abgezogenen flüssigen Monomer in einen Wäscher (11) einbringt, der in der Abgangsleitung (4) zwischengeschaltet ist,

(g) mittels des Wäschers (11) die in dem gasförmigen, nicht durch Polymerisation verbrauchten Monomer enthaltenen Feststoffpartikel durch das flüssige Monomer auswäscht, und

(h) mittels einer Leitung (12) das die aufgenommenen Feststoffpartikel enthaltende flüssige Monomer dem Polymerisationskessel (2) zuführt.

Zu dem erfindungsgemäßen Verfahren ist im einzelnen das folgende zu sagen:

## A) Stoffliche Seite

Das zu polymerisierende Monomer kann das einschlägig übliche sein, also z.B. Propylen allein oder ein Gemisch aus Propylen mit einem oder mehreren anderen $C_2$- bis $C_8$-$\alpha$-Monoolefinen, wie Ethylen, n-Buten-1, n-Hexen-1, n-Octen-1 oder 4-Methylpenten-1. Wie sich gezeigt hat, eignet sich das erfindungsgemäße Verfahren besonders gut zum Herstellen von Propylen-Homopolymerisaten, binären Copolymerisaten aus Propylen und Ethylen sowie ternären Copolymerisaten aus Propylen, Ethylen und n-Buten-1 oder anderen höheren $\alpha$-Monoolefinen. Die Polymerisate fallen in kleinteiliger Form als feinerer oder gröberer Grieß an, wobei die Teilchengröße - nicht anders als bei den einschlägig bekannten Verfahren -von den im einzelnen gewählten Verfahrensbedingungen abhängt. Es läßt sich somit sagen, daß der Teilchendurchmesser der Polymerisate im allgemeinen im Bereich von etwa 0,03 bis 10, insbesondere etwa 0,1 bis 5 mm liegt.

Die Polymerisation selbst erfolgt mittels eines Katalysatorsystems des Ziegler-Natta-Typs. Letztere gibt es bekanntlich in einer überaus großen Vielfalt, wovon sich gut bewährt haben die Zwei-Komponenten-Katalysatorsysteme aus (I) einer Titantrichlorid-Komponente und (II) einer Aluminiumalkyl-Komponente der allgemeinen Formel $AlR_3$ bzw. $ClAlR_2$ - worin R für einen $C_1$- bis $C_8$-Alkylrest steht - im Atomverhältnis Titan aus der Katalysator-Komponenten (I) : Aluminium aus der Katalysator-Komponente (II) von 1 : 1 bis 1 : 100. Es kann von großem Vorteil sein, wenn diese Zwei-Komponenten-Systeme durch (III) eine zusätzliche weitere Cokatalysatorkomponente zu Drei-Komponenten-Katalysatorsystemen ausgebaut sind.

Im Rahmen dieser Katalysatorsysteme sind für den erfindungsgemäßen Zweck gut geeignet mit Elektronendonatoren bzw. Lewis-Basen modifizierte sehr feinteilige Cokristallisate der Formel $TiCl_3$ . 1/3 $AlCl_3$. Derartige modifizierte Titantrichlorid-Katalysatorkomponenten gibt es in zahlreichen Varianten, da sie bekanntlich eine Reihe von Vorteilen mit sich bringen. Um unnötige Wiederholungen zu vermeiden, sei im gegebenen Zusammenhang schlaglichtartig beispielsweise verwiesen auf die GB-PS 851 113.

Für den erfindungsgemäßen Zweck besonders geeignete Katalysatorsysteme sind z.B. beschrieben in den GB-PSen 1 447 706, 1 485 181 und 1 512 730 sowie den US-PSen 3 937 691, 3 977 997, 4 120 823, 4 154 699, 4 154 700 und 4 299 318.

Insgesamt läßt sich somit sagen, daß die stoffliche Seite des erfindungsgemäßen Verfahrens als solche im Rahmen des einschlägig üblichen liegt.

## B) Verfahrenstechnische Seite

Sie hat ihren tiefsten Ursprung in den Techniken zum Herstellen von Homo- oder Copolymerisaten des Propylens in der Gasphase wie sie bekannt geworden sind z.B. aus den GB-PSen 837 301, 1 006 469 und 1 032 945. Die Prinzipien dieser Techniken sind unbeschadet ihres Alters sinngemäß voll beim erfindungsgemäßen Verfahren anwendbar; - womit sich insoweit nähere Ausführungen erübrigen.

In seinem spezielleren Aspekt basiert das erfindungsgemäße Verfahren - wie eingangs bereits dargelegt - im wesentlichen auf dem aus den US-PSen 4 012 573 und 4 330 645 bekannten Verfahren; es bedarf daher auch insoweit keiner besonderen Erläuterungen.

Indes ist zu den kennzeichnenden Merkmalen des erfindungsgemäßen Verfahrens das folgende zu sagen:

Sie bestehen darin, daß das eingangs definierte bekannte Verfahren derart ausgestaltet wird, daß man in weiteren Maßgaben

(e) mittels einer Pumpe (9) flüssiges Monomer aus dem Kondensator-Kühler-Speicher-System (5) abzieht,

(f) mittels einer Zweigleitung (10) eine Teilmenge des durch die Pumpe (9) abgezogenen flüssigen Monomer in einen Wäscher (11) einbringt, der in der Abgangsleitung (4) zwischengeschaltet ist,

(g) mittels des Wäschers (11) die in dem gasförmigen, nicht durch Polymerisation verbrauchten Monomer enthaltenen Feststoffpartikel durch das flüssige Monomer auswäscht, und

(h) mittels einer Leitung (12) das die aufgenommenen Feststoffpartikel enthaltende flüssige Monomer dem Polymerisationskessel (2) zuführt.

Diese Maßgaben sind vom Fachmann ohne weiteres zu vollziehen, zumal die dafür nötigen Vorrichtungen zum gängigen technischen Standard zählen. Letzteres gilt auch für den Wäscher (11), der ein zum Auswaschen von Feststoffpartikeln aus Gasen einschlägig üblicher sein kann, z.B. ein Gegenstrom-Wäscher, etwa in Form einer Füllkörpersäule. Wie sich gezeigt hat, sind für den erfindungsgemäßen Zweck besonders gut geeignet Strahlwäscher. Der Wäscher (11) hat die Aufgabe, die in dem gasförmigen, nicht durch Polymerisation verbrauchten Monomer enthaltenen Feststoffpartikel durch flüssiges Monomer auszuwaschen; - um sie dann darin dem Polymerisationskessel (2) wieder zuzuführen. Dabei ist darauf zu achten, daß die durch Zweigleitung (10) strömende Teilmenge an flüssigem Monomer so gewählt wird, daß die verbleibende, durch das Regelventil (7) strömende Teilmenge an flüssigem Monomer hinreichend groß ist, um die Maßgabe (c) sicher und allein erfüllen zu können. Hiervon abgesehen sind die Relationen der beiden Teilmengen zueinander nicht kritisch. Wie sich indes gezeigt hat, ist es von Vorteil, die durch Zweigleitung (10) strömende Teilmenge über die Zeit konstant zu halten; das Verfahren läuft dann besonders "ruhig".

Beispiel

Es wird gearbeitet mit einem einschlägig üblichen, mit einem Rührer versehenen Polymerisationskessel, der ein Nutzvolumen von 12,5 m³ hat.

In dem Reaktor wird ein Propylen-Homopolymerisat mit einem Schmelzindex (2,16 kg/230° C) von etwa 1,8 hergestellt durch Polymerisation von Propylen in Anwesenheit von Wasserstoff mittels eines Ziegler-Nata-Katalysatorsystems bei einer Temperatur von 75° C und einem Propylen-Druck von 28 bar sowie einem Wasserstoff-Druck von 0,1 bar in der Gasphase in einem Rührbett aus kleinteiligem, einen Teilchendurchmesser von 0,2 bis 4 mm aufweisenden Polymerisat.

Das verwendete Ziegler-Natta-Katalysatorsystem besteht aus (I) einer Titantrichlorid-Komponente, die gemäß Beispiel 2 der GB-PS 1 485 181 hergestellt worden ist sowie (II) einer Aluminiumalkyl-Komponente, namentlich Diethylaluminiumchlorid. Diese Katalysatorkomponenten werden getrennt voneinander in die Polymerisationszone eingebracht, und zwar 300 g/h der Komponente (I) sowie 800 g/h der Komponente (II); - was einem Molverhältnis Ti aus (I) : Al aus (II) von etwa 1 : 5 entspricht.

Die weiteren Rahmenbedingungen sind gemäß der US-PS 4 012 573 so gewählt, daß die Abfuhr der Polymerisationswärme durch Verdampfungskühlung erfolgt, wobei man durch eine Zuleitung (1) das Monomer im Gemisch mit Wasserstoff (insgesamt 7800 kg/h) kontinuierlich in den Polymerisationskessel (2) einbringt und durch eine Austragleitung (3) das Polymerisat (etwa 1100 kg/h) taktweise aus dem Polymerisationskessel (2) austrägt, mit den Maßgaben, daß man

(a) in dem Polymerisationskessel (2) den Druck und die Temperatur in einem Bereich hält, der dem gasförmigen Zustand des Monomer entspricht (was durch die o.g. Bedingungen erfüllt ist),

(b) durch eine Abgangsleitung (4) gasförmiges, nicht durch Polymerisation verbrauchtes Monomer im Gemisch mit Wasserstoff (insgesamt etwa 6400 kg/h) aus dem Polymerisationskessel (2) austrägt, das Monomer in einem Kondensator-Kühler-Speicher-System (5) verflüssigt sowie speichert und über eine Leitung (6) flüssig in den Polymerisationskessel (2) wieder einbringt,

(c) die Temperatur in dem Rührbett regelt durch fortlaufende Messung der Temperatur und eine bei Temperaturänderung mittels eines Regelventils (7) ausgelöste Änderung der pro Zeiteinheit eingebrachten Menge an flüssigem, in dem Polymerisationskessel (2) verdampfenden Monomer, und

(d) mittels einer Zuleitung (8) das durch Polymerisation verbrauchte sowie das mit dem Polymerisat ausgetragene Monomer durch Zufuhr von Frisch-Monomer ersetzt (etwa 1400 kg/h), sowie den zur Aufrechterhaltung der gewünschten Konzentration erforderlichen Wasserstoff ergänzt (etwa 0,12 kg/h).

Erfindungsgemäß ist das Verfahren im besonderen so ausgestaltet, daß man in weiteren Maßgaben

(e) mittels einer Pumpe (9) flüssiges Monomer aus dem Kondensator-Kühler-Speicher-System (5) abzieht (etwa 6400 kg/h),

(f) mittels einer Zweigleitung (10) eine Teilmenge (über die Zeit konstant etwa 3250 kg/h) des durch die Pumpe (9) abgezogenen flüssigen Monomer in einen Strahlwäscher (Venturi-Wäscher mit angeschlossenem Tropfenabscheider) (11) einbringt, der in der Abgangsleitung (4) zwischengeschaltet ist,

(g) mittels des Wäschers (11) die in dem gasförmigen, nicht durch Polymerisation verbrauchten Monomer enthaltenen Feststoffpartikel durch das flüssige Monomer auswäscht, und

(h) mittels einer Leitung (12) das die aufgenommenen Feststoffpartikel enthaltende flüssige Monomer dem Polymerisationskessel (2) zuführt.

Auf diese Weise läßt sich das Polymerisationsverfahren über eine längere Zeitspanne ohne Störung betreiben, insbesondere auch ohne nennenswerte Verschmutzungen des Kondensator-Kühler-Speicher-Systems (5).

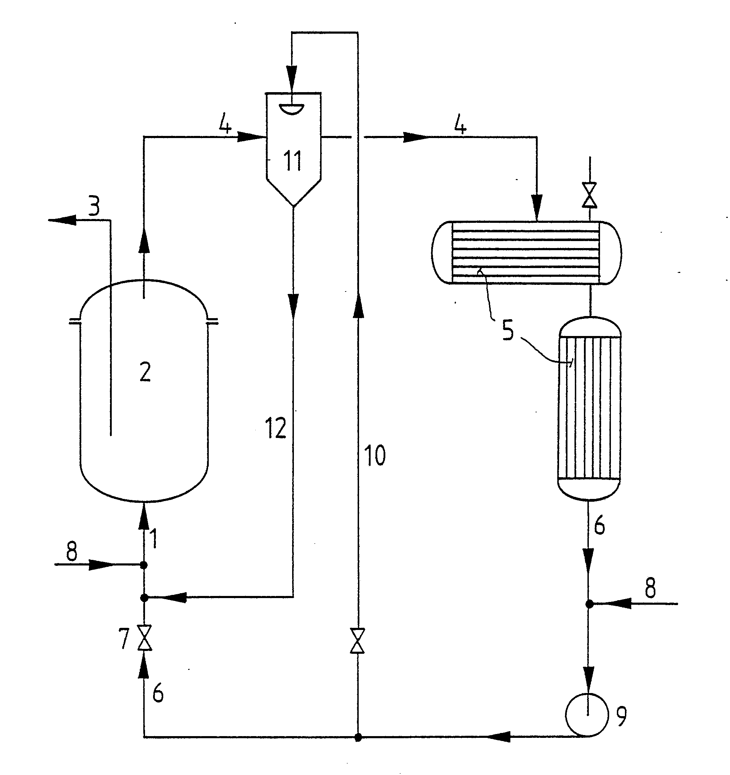

## Ansprüche

1. Verfahren zum Herstellen von Propylen-Homopolymerisaten oder Propylen-Copolymerisaten, die mehr als 50 Gew.% Propylen sowie weniger als 50 Gew.% anderer, 2 bis 8 Kohlenstoffatome aufweisender α-Monoolefine einpolymerisiert enthalten, durch Polymerisation des bzw. der zugrundeliegenden Monomeren - d.h. des entsprechenden "Monomer" - mittels eines Ziegler-Natta-Katalysatorsystems, bei Temperaturen von 40 bis 150° C und Gesamtdrücken von 10 bis 50 bar in der Gasphase in einem Rührbett aus kleinteiligem Polymerisat unter Abfuhr der Polymerisationswärme durch Verdampfungskühlung, wobei man durch eine Zuleitung (1) das Monomer kontinuierlich oder taktweise in einen Polymerisationskessel (2) einbringt und durch eine Austragleitung (3) das Polymerisat kontinuierlich oder taktweise aus dem Polymerisationskessel (2) austrägt, mit den Maßgaben, daß man

(a) in dem Polymerisationskessel (2) den Druck und die Temperatur in einem Bereich hält, der dem gasförmigen Zustand des Monomer entspricht,

(b) durch eine Abgangsleitung (4) gasförmiges, nicht durch Polymerisation verbrauchtes Monomer aus dem Polymerisationskessel (2) austrägt, das Monomer in einem Kondensator-Kühler-Speicher-System (5) verflüssigt sowie speichert und über eine Leitung (6) flüssig in den Polymerisationskessel (2) wieder einbringt,

(c) die Temperatur in dem Rührbett regelt durch fortlaufende Messung der Temperatur und eine bei Temperaturänderung mittels eines Regelventils (7) ausgelöste Änderung der pro Zeiteinheit eingebrachten Menge an flüssigem, in dem Polymerisationskessel (2) verdampfenden Monomer, und

(d) mittels einer oder mehrerer Zuleitungen (8) das durch Polymerisation verbrauchte Monomer durch Zufuhr von Frisch-Monomer ersetzt,

dadurch gekennzeichnet, daß man in weiteren Maßgaben

(e) mittels einer Pumpe (9) flüssiges Monomer aus dem Kondensator-Kühler-Speicher-System (5) abzieht,

(f) mittels einer Zweigleitung (10) eine Teilmenge des durch die Pumpe (9) abgezogenen flüssigen Monomer in einen Wäscher (11) einbringt, der in der Abgangsleitung (4) zwischengeschaltet ist,

(g) mittels des Wäschers (11) die in dem gasförmigen, nicht durch Polymerisation verbrauchten Monomer enthaltenen Feststoffpartikel durch das flüssige Monomer auswäscht, und

(h) mittels einer Leitung (12) das die aufgenommenen Feststoffpartikel enthaltende flüssige Monomer dem Polymerisationskessel (2) zuführt.

2. Verfahren nach Anspruch 1, dadurch gekennzeichnet, daß man Wasserstoff als Molekulargewichtsregler einsetzt.

3. Verfahren nach den Ansprüchen 1 oder 2, dadurch gekennzeichnet, daß man das mit dem Polymerisat ausgetragene Monomer durch Zufuhr von Frisch-Monomer ersetzt.